# EUROPEAN PATENT APPLICATION

(11) **EP 1 290 947 A2**
(43) Date of publication of application: **12.03.2003**
(21) Application number: 02396138.6
(22) Date of filing: 06.09.2002
(51) Int. Cl.: A21B 3/04

(54) **Device and method for measuring humidity in a baking oven**

(30) Priority: 10.09.2001 FI 20011786
(71) Applicant: Dieta Oy, 00880 Helsinki (FI)
(72) Inventor: Halmetoja, Kari, 01300 Vantaa (FI)
(74) Representative: LEITZINGER OY

(57) **Abstract**

Method and device for measuring the internal climate of a baking oven by means of a measurement for the conductivity of air. The humidity of air is concluded from conductivity and temperature.

## Description

The invention relates to the control and regulation of humidity in a frying or baking oven by measuring the humidity by means of the impedance of air.

It is an object of the invention to improve the quality of baked or fried products by maintaining temperature and humidity conditions in the oven as desired.

This invention seeks to achieve the ability to measure and adjust humidity in a hot oven in a repeatable and sufficiently accurate manner for obtaining a baking result that would be constant time after time with the same baking set-ups.

The prior known solutions are based for example on measuring the rotational speed of an impeller driven by a small electric motor, or on measuring the temperature of condensation water present in the evaporator of an oven. Ordinary methods based on the measurement of relative humidity do not function in an oven with a temperature of more than 100 degrees. Likewise, for example a psychrometer does not function, since the wet wick is always at a 100 degree temperature when the oven temperature is sufficiently high.

The application WO9852418 (HOFER WOLFGANG) introduces a method and device for controlling oven conditions. There is no description, however, as to how the humidity measurement is performed. EP 1,102,010, Wiesheu GmbH and DE 29923420 U1 disclose humidifying oven solutions. A combination oven, provided with a water atomizer, is disclosed in US patent 6188045 B1, Alto-Shaam, Inc. and in US patent 5530223, Angelo Po Grandi Cucine S-p.A.; A condensing apparatus for oven humidity is disclosed in the application DE 19607940 A1 Pionati, Uwe; A steam generator for oven humidification is described in the publication WO97/33479 A1 Aktiebolaget Electrolux.

The discovered publications do not disclose a humidity measuring process that would be applicable to the adjustment of oven humidity. The Applicant is also familiar with the above-mentioned measurement which is based on the rotary drive of an impeller. An impedance-based method found in patent publications is disclosed in the publication DE 3938823, Miele & Cie, but this method deals with the resistance of a dish being baked, and with stopping the baking when the dish has dried sufficiently. Humidity sensors, based on the impedance variations of a sensor, are also known from publications US-A-4,270,085, US-A-4,422,129, JP A2-5,164,330 and US-A-4,280,115. In addition, measurement of transition heat is utilized in the publication US-A-5,272/963. These documents do not describe measurement of internal air impedance in an oven.

It was experimentally discovered that sufficient resolution is obtained with an ordinary responsive digital resistance meter by measuring the temperature of air and the direct-current resistance of air from between two metal sheets. As temperature rises, the electrical conductivity of air increases considerably, but it is nevertheless easy for a microprocessor to work out humidity as a function of temperature and conductivity. In any case, the measurement of oven temperature is a necessity if the oven is to be controlled electronically. The tests were conducted with an ordinary digital resistance meter and with a 9 V battery in series therewith for a higher responsivity at high resistance rates. It was discovered that there is a major difference in resistances between a dry oven and a humid one, and the measurement was highly repeatable.

Since the measurement is based on measuring a high resistance, the most significant errors in measurement originate from leakage currents, which are caused for example by dirt on the surface of conductors and insulators. For this reason, the conductor sheets used in a measuring process must be suspended in such a way that the suspensions make up a long passage for leakage currents. In addition, the sheets, and a protective cover possibly set in front of the sheets, must be readily washable in a dish washer. For example, glass can be conveniently used as appropriately shaped frames for metal sheets or an appropriate film can be metallized on glass surface for a sensor, such that the error caused by leakage currents traveling along an insulation surface would remain insignificant. One example of a protective cover comprises a filter casing made from wire mesh or glass screen or metal or glass wool, which denies access of a liquid and solid material to the sensor, yet allows for a sufficiently free circulation of air.

Operation of one embodiment will now be described with the aid of figures. The question is about a test arrangement conducted for verifying functionality of the measuring method, along with measuring results obtained thereby.

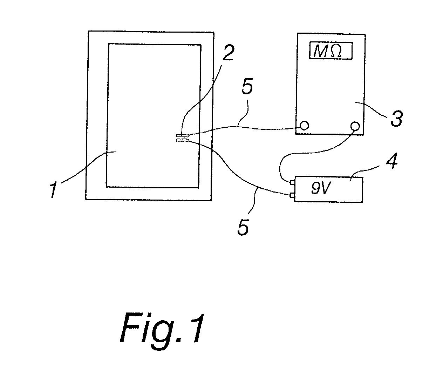

### Fig. 1. Measuring system

Referring to fig. 1, an oven 1 is fitted with two parallel metal sheets 2 at a distance of about 1..2 mm from each other. Conductors 5 extending from the sheets are passed to a resistance meter 3, having its measuring range expanded by connecting in series a 9V battery. Subsequently, the measuring system provided measuring results as follows.

| Temperature °C | Dry oven M | Humid oven*) M |
|---|---|---|
| 90 | >2000 | 88 |
| 95 | >2000 | 79 |
| 98 | 1992 | 76 |
| 100 | 1655 | 74 |
| 105 | 1100 | 69 |
| 110 | 803 | 64 |
| 115 | 588 | 59 |
| 120 | 443 | 54 |
| 125 | 321 | 49 |
| 128 | | 46 |
| 130 | 264 | 44 |

| | | |
|---|---|---|
| *) with full humidification, humid enough for water to condense on oven window. | | |

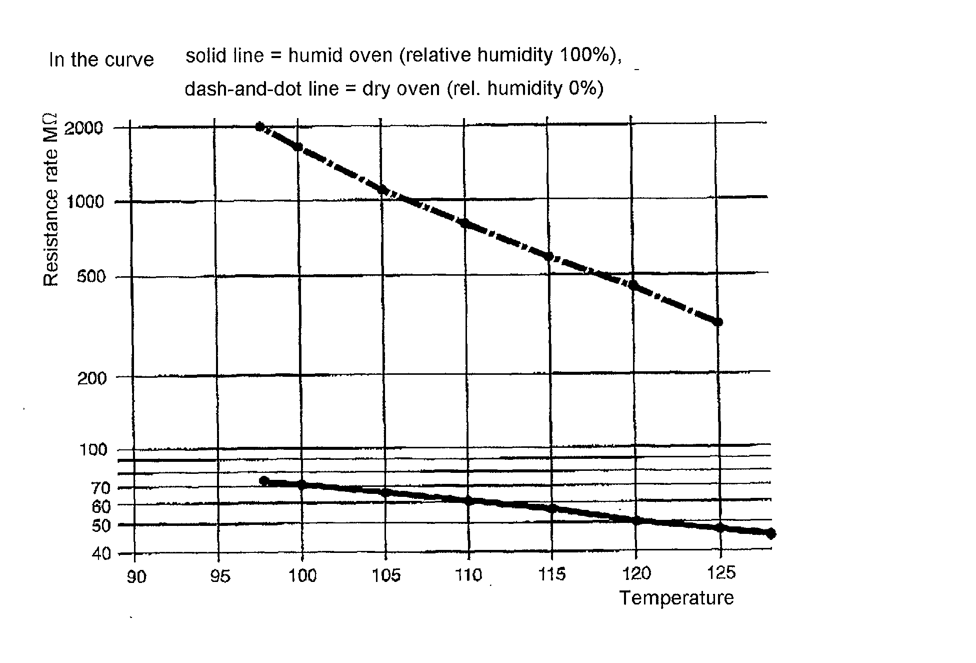

Since the meter has been modified by an external voltage source, the measuring results are not truthful, yet provide an idea regarding the transition of impedance according to temperature and humidity.

In real operation, in which the environmental conditions for a sensor are dirtier than in a test procedure, it is necessary to take for example grease splatters into account. This is accommodated by encasing the sensor within a metal wool or mesh. In addition, the measuring lines of a sensor must be brought to the sensor in such a way that, as a result of the suspension and lines, the leakage currents have a long passage to travel. Another maintenance facilitating factor is that the sensor is removable and machine washable. Naturally, the second electrode of a sensor can also be constituted by said metal mesh or wool.

Regarding the DC current tested herein, the measurement for conductivity of air is a functional solution, but naturally an attempt can be made to reduce the significance of leakage currents by using a suitable frequency for measurement. Thus, the procedure shall also involve measurement of the capacitive properties of air, in addition to mere DC conductivity. The measuring can be effected by a bridge connected capacitance measurement or a resonant circuit having its properties changing according to a medium.

The applied measuring voltage can be fairly high even by electrical safety regulations, provided that in series with a sensor is connected a sufficiently high-capacity resistance, which can simultaneously function as a shunt for power measurement. For example, with a measuring voltage of 1000V and 10 MOhm, the maximum current is only 100 nA, which is totally harmless for a human being. Naturally, if such a high voltage were employed, there must be an air gap of several millimeters in order to avoid breakdowns. In any case, with regard to the measurement of a voltage to be measured across a shunt resistance, it is necessary to be prepared for breakdowns, i.e. the voltage arriving at an AD-converter must be restricted within a safe range. This is readily effected for example by means of a dropping resistor coupled with a measuring point, which is followed by a limiting zener diode and possibly a filter capacitor. Other protection methods are also viable, known for example from ESD (Electro Static Discharge) protection. One feasible option is also to connect a fairly high-voltage supplying power source in series with a protective resistor and to effect the power measurement by means of a separate second resistor connectable between the ground and the sensor. In the case of a single resistor, it is necessary to carry out a voltage measurement, which uses a floating ground and is electrically isolated from the rest of the circuit. This is not a major problem, nor is it very expensive to overcome, as there are separators available intended for switched-mode power supplies and the amount of current used by voltage measurement is very little. Separation is inevitable for the reason that measurement cannot be effected in relation to ground potential, since in this case the high-voltage power supply is connected without a dropping resistor and there is an imminent hazard of electrical shock. A useful measuring voltage is mains current either as such or rectified, as long as the voltmeter is modified such that the AD-converter is responsive to a frequency to be measured.

The use of a high voltage also enables the measurement of a voltage working across measuring electrodes, as the high voltage is fed across the electrodes through a high-capacity resistor. Thus, the measured voltage also fluctuates non-linearly according to breakdowns of air. The breakdown voltage or conductivity subjected to the activity of a large-scale electric field is also a humidity-related quantity, which can be used according to the invention for the measurement of oven humidity.

## Claims

1. A measuring method for frying, baking or cooking conditions in an oven, **characterized in that** the oven temperature and the electrical conductivity of internal oven air is measured and the obtained result is used for working out the humidity.

2. A method as set forth in claim 1, **characterized in that** the impedance value to be measured is a direct-current conductivity across electrodes.

3. A method as set forth in claim 1, **characterized in that** the conductivity value to be measured is an alternating-current quantity.

4. A method as set forth in any of claims 1-3, **characterized in that** the impedance to be measured is a voltage-related quantity.

5. A method as set forth in claim 4, **characterized in that** the electric field to be used in measuring and working across the electrodes is so large that variations in conductivity occur.

6. A measuring device for measuring the humidity of internal oven air, **characterized in that** the impedance of internal oven air is measured for estimated humidity.

7. A measuring device as set forth in claim 6, **characterized in that** the measuring electrodes are removable for cleaning.

8. A measuring device as set forth in any of claims 6-7, **characterized in that** the measuring electrodes are protected from external dirt by means of a mesh, wool or fabric made for example from metal, glass or some other heat resistant material.

9. An oven, **characterized in that** it is fitted with a measuring device as set forth in any of claims 6-8.

10. An oven, **characterized in that** baking conditions are adjusted or baking time is reset according to measurement as set forth in any of claims 1-5 for the conductivity of internal oven air and by means of temperature measuring results.
